# FASCICULE DE BREVET EUROPEEN

(11) **EP 0 576 310 B1**
(45) Date de publication et mention de la délivrance du brevet: **12.11.1997**
(21) Numéro de dépôt: 93401280.8
(22) Date de dépôt: 18.05.1993
(51) Int. Cl.: G01L 3/10, G01L 5/22

(54) **Dispositif de mesure d'un couple de torsion sur un arbre tournant**
Vorrichtung zur Drehmomentmessung an einer rotierenden Welle
Device for measuring torque in a rotating shaft

(30) Priorité: 26.06.1992 FR 9207872
(43) Date de publication de la demande: 29.12.1993
(73) Titulaire: SNR ROULEMENTS, F-74010 Annecy Cédex (FR)
(72) Inventeur: Blache, Claire, F-74960 Meythet (FR); Peilloud, Fernand, F-74540 Hery-sur-Alby (FR)
(74) Mandataire: Ernst-Schonberg, Michel

(56) Documents cités:
- US-A- 4 550 597
- PATENT ABSTRACTS OF JAPAN vol. 12, no. 339 (P-757)(3186) 12 Septembre 1988; & JP-A-63 098 534
- SOVIET PATENTS ABSTRACTS Section EI, Week E01, 17 Février 1982 Derwent Publications Ltd., London, GB; Class S, AN 82-A1427E; & SU-A-815 529

## Description

L'invention concerne un dispositif de mesure d'un couple de torsion sur un arbre tournant dans lequel deux générateurs de champ magnétique sont situés dans le plan d'une section droite dudit arbre et deux organes détecteurs du champ magnétique sont immobilisés dans le plan d'une section droite dudit arbre et dans lequel lesdits organes détecteurs délivrent un signal proportionnel au couple de torsion par suite du décalage angulaire relatif des générateurs de champ par rapport aux organes détecteurs.

La publication FR-A-2626368 décrit un dispositif dans lequel le décalage angulaire de deux générateurs de champ magnétiques respectivement placés dans deux sections droites de l'arbre est détecté par deux capteurs à sortie de signal en tout ou rien et dans lequel le couple de torsion est proportionnel au déphasage magnétique des champs d'induction respectivement détectés par les capteurs.

La publication FR-A-2661246 décrit un dispositif dans lequel le décalage angulaire de deux générateurs de champ magnétique est détecté par un capteur à sortie de signal proportionnel au couple de torsion de l'arbre tournant.

Lorsque les générateurs de champ magnétique sont constitués par des aimants multipolaires, la sensibilité de la mesure du couple est limitée par la longueur minimale de fabrication des aimants.

Cette mesure est délicate à réaliser lorsque le couple de torsion est faible et lorsque le couple d'entraînement est important.

Un tel dispositif appliqué à une colonne de direction de véhicule automobile doit satisfaire aux conditions suivantes :
- étendue de la mesure ± 10 m.N,
- sensibilité de la mesure ± 0,1 m.N,
- couple maximum à transmettre : 200 m.N,
- décalage angulaire maximal autorisé entre l'entrée et la sortie du dispositif de mesure : 4°,
- signal électrique de sortie ± 2V autour de la valeur du signal à couple nul et pour toute valeur du couple dans l'étendue de la mesure.

L'invention a pour objet un dispositif de mesure d'un couple de torsion par la mesure de micro-déplacements de torsion de deux sections d'un arbre à forte rigidité, qui offre une résistance aux couples de torsion importants sans système limitateur de couple.

L'invention a aussi pour objet un dispositif de mesure d'un couple sur un arbre bloqué, ou lorsque sa vitesse de rotation varie.

L'invention a encore pour objet un dispositif simple et économique de mesure d'un couple sur un arbre de direction automobile dont le montage peut être réalisé quelle que soit la position dudit arbre.

L'invention a encore pour objet un dispositif dont la rigidité en torsion est au moins égale à la rigidité en torsion de la section la plus faible d'une colonne de direction automobile non assistée à commande manuelle.

Selon l'invention les générateurs de champ magnétique possèdent une structure aimantée à directions d'aimantation antiparallèles et sont supportés par un premier disque solidaire de l'arbre tournant et disposé à l'extrémité d'un moyeu entourant ledit arbre et qui porte un palier de montage du moyeu d'un deuxième disque axialement décalé sur lequel sont rigidement fixés les détecteurs du champ magnétique.

Le dispositif ainsi réalisé peut être monté directement sur un arbre tournant et ne nécessite aucune réduction locale de la rigidité dudit arbre pour augmenter la sensibilité du dispositif en fonction du décalage angulaire.

Par voie de conséquence, l'arbre peut supporter l'intégralité du couple de commande sans moyens limiteurs additionnels de la déformation due à la torsion.

D'autres caractéristiques et avantages de l'invention apparaîtront à la lecture de la description d'exemples de réalisation du dispositif, faite en référence au dessin annexé dans lequel:
- la figure 1 est une vue en coupe longitudinale du montage d'application du dispositif sur un arbre tournant,
- la figure 2 est une représentation schématique en perspective du dispositif générateur de champ magnétique,
- la figure 3 est une représentation schématique en perspective du dispositif détecteur du champ magnétique,
- la figure 4 est une vue partielle du dispositif de mesure de couple monté,
- la figure 5 représente une courbe caractéristique de la variation du champ magnétique dans l'intervalle de séparation entre le générateur et le détecteur de champ,
- la figure 6 est une représentation du signal électrique de sortie,
- la figure 7 est une vue en coupe longitudinale d'une variante de réalisation du dispositif,
- la figure 8 est une coupe partielle d'une autre variante de réalisation du dispositif,
- la figure 9 est une représentation schématique du dispositif générateur de champ en rapport avec la variante de réalisation de la figure 8.

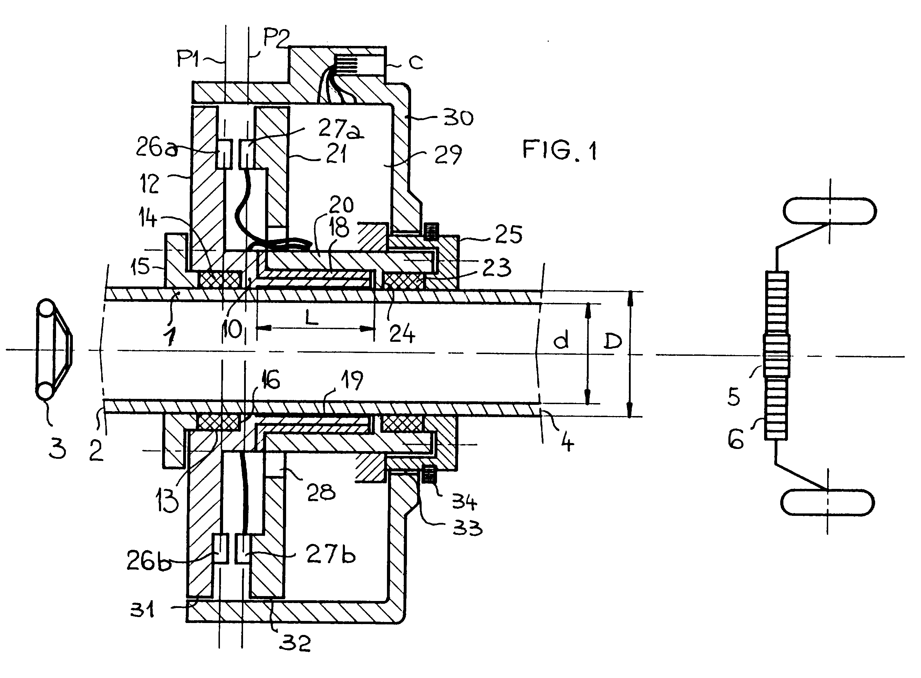

En référence à la figure 1, un arbre tubulaire tournant de colonne de direction possède un diamètre intérieur d et un diamètre extérieur D.

A titre d'exemple l'arbre 1 est destiné à être relié par son extrémité 2 à un volant de commande moteur 3 et par son extrémité 4 à un pignon récepteur 5 destiné à la commande d'une crémaillère de direction 6.

L'arbre 1 est entouré par le moyeu tubulaire 10 dont une extrémité supporte un premier disque 12 appelé par la suite "disque-codeur".

Le moyeu 10 et le disque-codeur 12 sont réalisés en un matériau ferromagnétique doux ou en acier doux et possèdent un lamage 13 destiné au montage d'une garniture expansible 14 au contact de l'arbre 1 et du lamage 13 sous l'action d'un effort de compression communiqué par une bride 15 vissée sur le disque codeur 12. La garniture 14 est immobilisée axialement au contact d'un épaulement 16 du lamage 13 et assure le blocage du disque codeur 12 et du moyeu 10 au contact de l'arbre 1 sous l'action de l'effort de compression exercé par la bride 15.

Le moyeu 10 porte le palier 18 de montage d'un moyeu 20 d'un deuxième disque 21 axialement décalé sur l'arbre 1 par rapport au disque-codeur 12.

Le disque 21 est appelé dans la suite de la description "disque-capteur".

Le moyeu 20 et le disque-capteur 21 préférentiellement réalisés en un matériau ferromagnétique doux ou en acier doux, sont immobilisés au contact de l'arbre 1 ainsi que cela vient d'être expliqué pour le moyeu 10 et le disque-codeur 12 par une garniture expansible 23 serrée au contact d'un épaulement 24 par une bride 25.

Le moyeu 10 est monté sur l'arbre 1 avec un jeu 19.

Le disque-codeur 12 porte deux générateurs de champ magnétique 26a, 26b diamétralement opposés situés symétriquement dans le plan P1 d'une section droite de l'arbre 1.

D'une manière analogue le deuxième disque-capteur 21 porte des détecteurs de champ magnétique constitués par des capteurs à effet Hall 27a, 27b situés symétriquement dans le plan P2 d'une section droite de l'arbre 1.

Le disque 21 possède par ailleurs un perçage 28 de passage d'un câble de raccordement électrique à des organes transformateurs de signaux disposés dans un logement 29.

Le logement 29 est délimité par le moyeu 20, le disque-capteur 21 et un boîtier 30.

Le boîtier 30 porte un connecteur C destiné au raccordement extérieur du dispositif.

Le boîtier 30, immobilisé axialement par un anneau 34 porté par-la bride 25 , est monté libre en rotation sur des portées 31, 32, 33 respectivement situées à la périphérie des disques 12, 21 et de la bride 25.

Le dispositif fonctionne comme suit.

L'arbre 1 assure la transmission du mouvement de rotation du volant 3 au pignon 5.

Lorsque le pignon 5 oppose une résistance à la rotation du volant 3, l'arbre 1 subit une déformation de torsion.

Les sections de l'arbre 1 portant respectivement les éléments 13, 15, 16 et 23, 25, 24 subissent un déplacement relatif qui entraîne un déplacement angulaire relatif des disques 12, 21.

L'importance du déplacement angulaire relatif des disques 12, 21 dépend notamment de la longueur du tronçon L de l'arbre 1 disposé entre les épaulements 16, 24.

A la suite de l'immobilisation angulaire du boîtier 30, le dispositif est susceptible de se déplacer angulairement dans le boîtier 30 au niveau des portées 31, 32, 33.

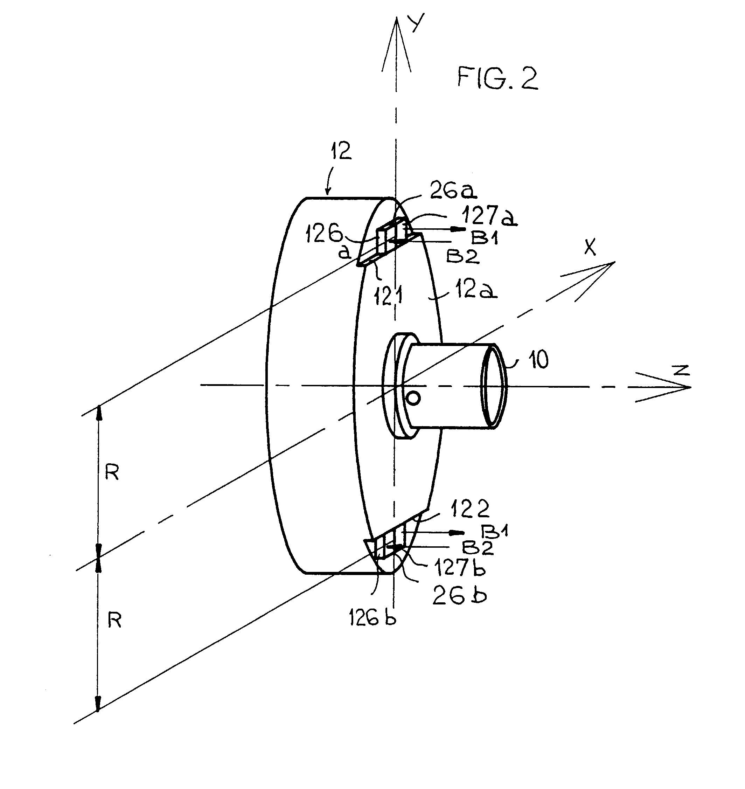

Selon la figure 2, la face 12a du disque codeur 12 porte deux épaulements linéaires de guidage 121 et 122 parallèles entre eux et équidistants de l'axe de rotation OZ. Les épaulements 121-122 portent respectivement les générateurs de champ magnétique 26a et 26b.

Les deux générateurs de champ magnétique 26a et 26b sont localisés selon la direction de l'axe OY par leurs appuis respectifs sur les épaulements 121 et 122.

La latitude de déplacement des générateurs de champ 26a et 26b le long des épaulements 121 et 122 permet de régler la position de ceux-ci selon la direction OX, préalablement à leur immobilisation définitives si on considère un système d'axes orthogonaux OX, OY et OZ.

Le générateur de champ 26a est constitué par deux aimants parallélépipèdiques 126a et 127a placés bout à bout.

La direction d'aimantation de chaque aimant 126a, 127a est perpendiculaire à sa face d'appui sur le disque 12.

Par contre le vecteur d'induction magnétique B1 généré par l'aimant 127a est dirigé dans le sens des Z positifs alors que le vecteur d'induction magnétique B2 généré par l'aimant 126a est dirigé dans le sens des Z négatifs.

Cette disposition permet d'obtenir dans la proximité de l'aboutement des aimants 126a et 127a un fort gradient de champ magnétique pour un déplacement dans la direction OX.

De manière analogue le générateur de champ 26b est constitué par deux aimants parallélipipédiques 126b, 127b placés bout à bout. Le vecteur d'induction magnétique B1 généré par l'aimant 127b est dirigé dans le sens des Z positifs. Le vecteur B2 généré par l'aimant 126b est dirigé dans le sens des Z négatifs. Selon une caractéristique du disque codeur 12, les aboutements des aimants 126a et 127a et des aimants 126b et 127b sont situés dans le plan YOZ et les vecteurs induction magnétique B1 et B2, délivrés par le générateur magnétique 26a, sont symétriques par rapport au plan XOZ, aux vecteurs induction magnétique B1 et B2, délivrés par le générateur de champ magnétique26b.

Les centres des éléments magnétiques 26a et 26b sont à une distance R du plan XOZ. R est appelé conventionnellement "rayon de lecture".

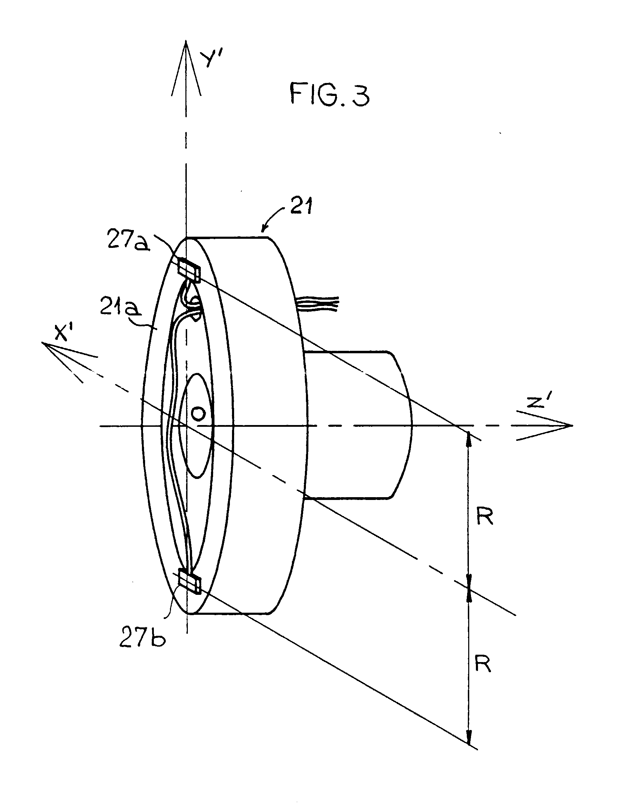

Selon la figure 3, la face 21a du disque-capteur 21 porte les détecteurs de champ magnétique à effet Hall 27a et 27b fixés de façon à ce que leurs centres soient localisés symétriquement dans un plan diamétral défini par exemple par les axes OY' et OZ' et à une distance R du centre O. R est appelé conventionnellement rayon de lecture.

En référence aux figures 1 et 3, le dispositif de mesure du couple est réglé en situation de torsion nulle en faisant correspondre les plans (OY,OZ) et (OY',OZ'), préalablement au serrage définitif des éléments 13, 15, 16 et 23, 25, 24.

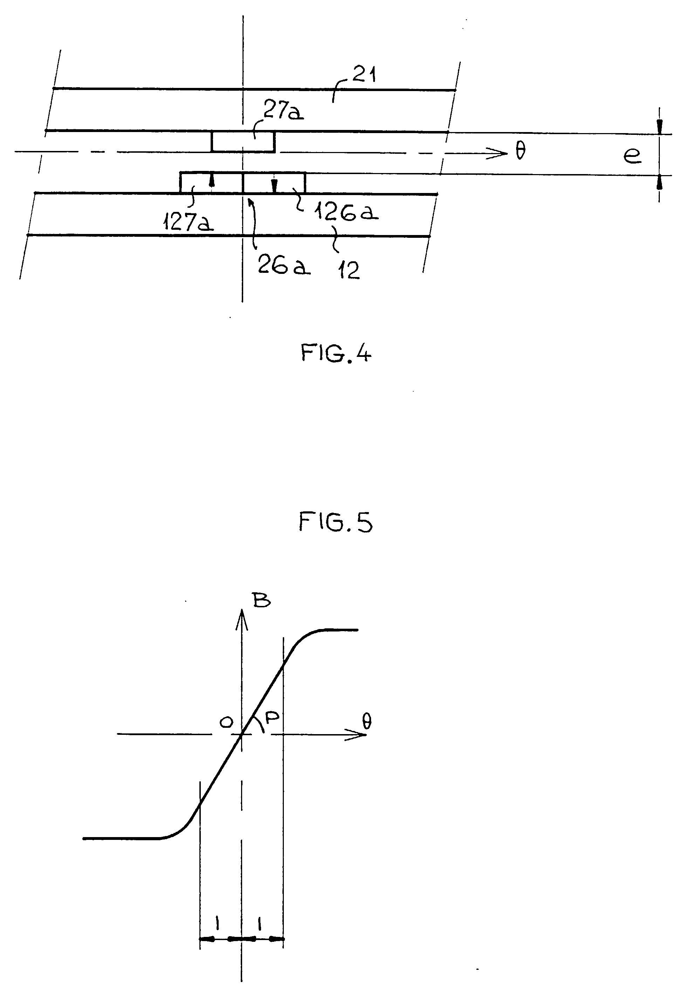

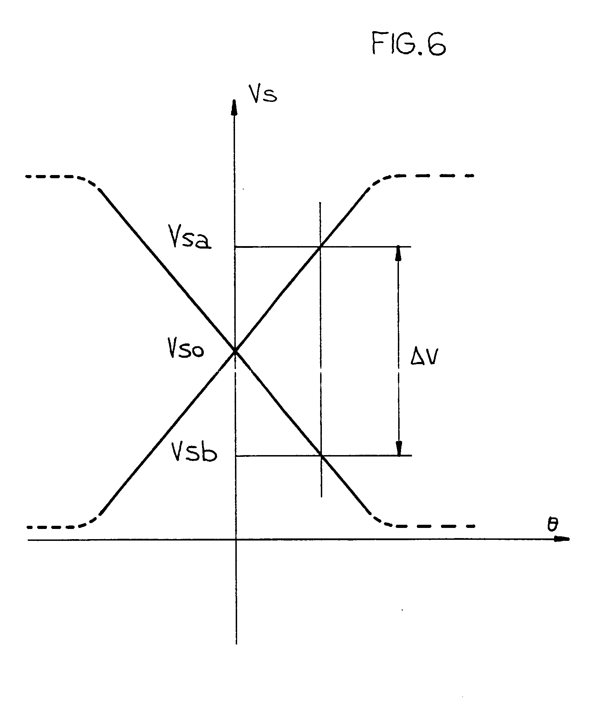

La figure 4 représente une vue partielle du dispositif monté et montre l'entrefer "e" entre les éléments magnétiques 126a, 127a et le disque capteur 21 portant le détecteur 27a. La figure 5 illustre la variation de l'induction magnétique B enregistrée par le détecteur 27a lorsque le disque 21 se déplace dans la direction θ . Les aimants 126a et 127a sont préférentiellement du type Néodyme-Fer-Bore ou Samarium-Cobalt dont le champ d'induction magnétique rémanent est compris entre 1 et 1,25 Tesla. Les épaisseurs des disques 12 et 21 sont choisies pour que leurs matériaux constitutifs n'atteignent pas la valeur de saturation magnétique. Dans ces conditions, selon la figure 5, l'induction magnétique B qui traverse l'entrefer e présente dans la zone à proximité de l'aboutement des éléments tels que 127a ou 126b, 127b et selon une direction θ parallèle aux faces 12a et 21a des disques 12 et 21, une variation linéaire de pente P d'environ 0,4 mT par micromètre sur une distance 21 = 0,8 mm.

Si l'axe OY' du détecteur 27a est à couple nul dans le plan de l'aboutement des aimants 126a et 127a, l'application de couple sur le dispositif se traduit par un déplacement selon la direction θ, du détecteur 27a par rapport à l'aboutement des éléments 126a, 127a, transposé par ledit détecteur en une tension électrique Vs proportionnellement au champ magnétique qui le traverse, en une relation linéaire avec la valeur du déplacement dans tout l'intervalle 2I.

A couple de torsion nul, les signaux de sortie Vsa et Vsb respectivement issus des détecteurs 27a et 27b sont égaux à Vo.

Le couple de torsion se traduit par exemple par une rotation angulaire du disque 21 par rapport au disque 12 et par un déplacement relatif des détecteurs 27a et 27b par rapport aux générateurs du champ 26a et 26b et entraîne une variation du signal de sortie Vsa positive et une variation du signal de sortie Vsb négative.

Selon la figure 6, la valeur absolue de la différence des deux signaux de sortie Δ V = Vsa-Vsb représente la valeur du couple de torsion appliqué sur l'arbre 1 et le signe de la différence indique le sens d'application du couple. Cette disposition des générateurs 26a et 26b est insensible aux erreurs de mesure dues à une composante de flexion appliquée à l'arbre 1 dans l'un quelconque des plans passant par l'axe OZ.

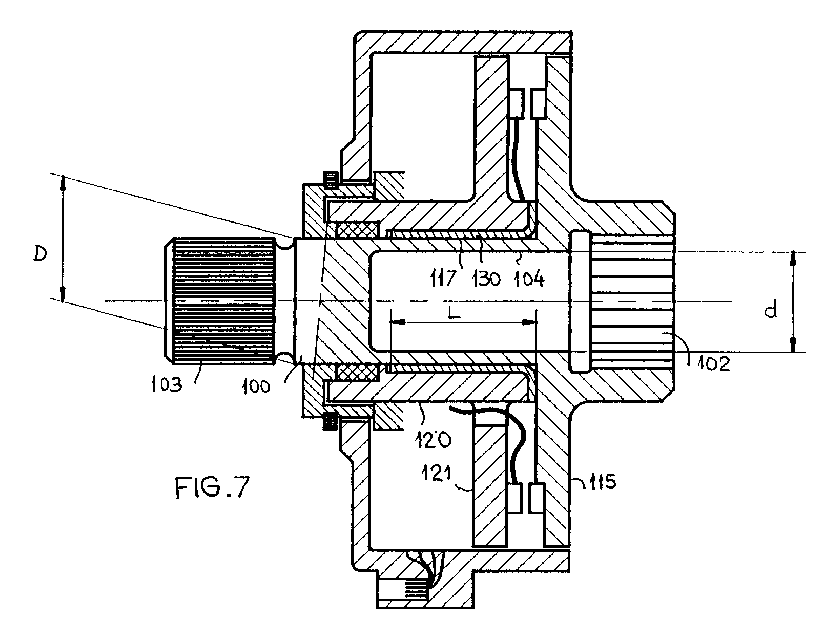

La figure 7 représente une variante de réalisation du dispositif dans lequel l'arbre 1 est remplacé par un tronçon d'arbre 100 qui porte à une extrémité une cavité à cannelures 102 permettant une liaison sans jeu avec un organe moteur et possède à l'autre extrémité une portée à cannelures 103 permettant une liaison sans jeu avec un organe récepteur.

Le fond de la cavité 102 est situé dans le plan radial du disque codeur 115 dont le moyeu constitue l'arbre 100.

Une portée cylindrique 117 de diamètre D de l'arbre 100 s'étend axialement entre le disque codeur 115 et la portée cannelée 103 et porte un palier 130.

Une bague moyeu annulaire 120 montée concentriquement à l'extérieur de l'arbre 100 est en butée axiale sur le palier 130.

L'extrémité de la bague moyeu 120 tournée vers le disque codeur 115 porte un disque capteur 121. Le disque codeur 115 est agencé identiquement au disque codeur 12 de la figure 1. De même le disque capteur 121 est agencé identiquement au disque capteur 21.

L'autre extrémité de la bague moyeu 120 porte un moyen d'immobilisation local formé par un corps déformable pressé contre un épaulement par une bride à vis telle que décrite en référence à la figure 1. Ce moyen d'immobilisation local, est axialement distant d'une longueur L du disque codeur 115, et agit sur la portée 117 à proximité de la portée cannelée 103. L'arbre 100 possède d'autre part un alésage borgne 104 de diamètre d qui s'étend axialement du fond de la cavité cannelée 102 sensiblement jusqu'au plan d'immobilisation de la bague 120.

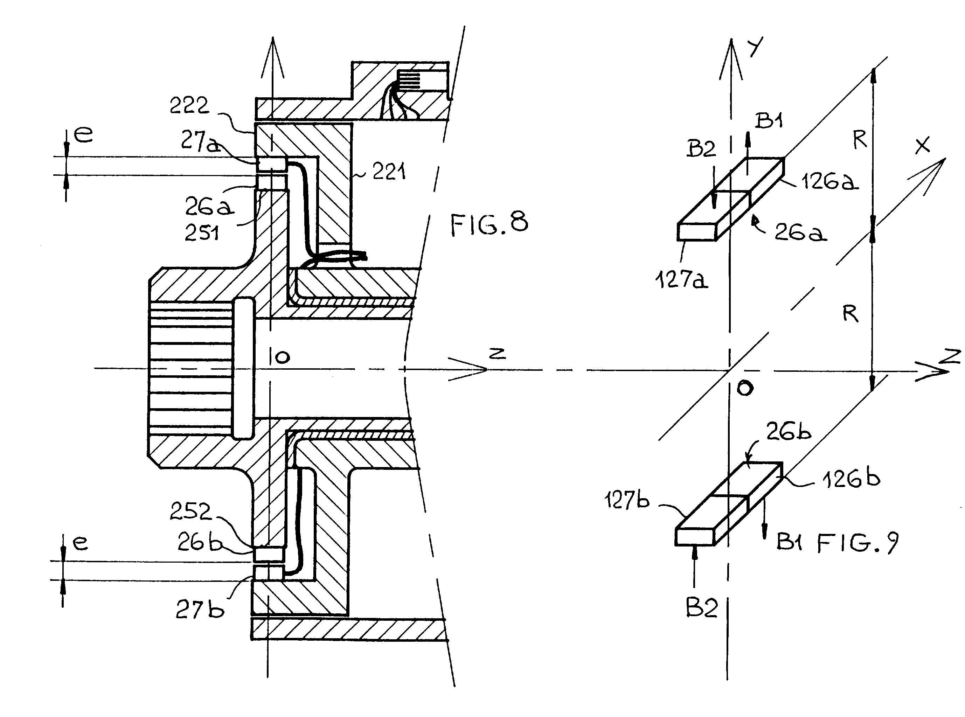

La figure 8 illustre la disposition des générateurs de champ magnétique 26a et 26b respectivement fixés sur deux surfaces planes parallèles 251 et 252 ménagées sur le diamètre extérieur d'un disque-codeur 215 à égale distance de l'axe OZ. Les moyens détecteurs 27a et 27b sont fixés sur une extension axiale 222 du disque-capteur 221.

Les disques codeur 215 et capteur 221 sont préférentiellement constitués en acier doux ou en un matériau ferromagnétique doux.

Les deux générateurs de champ 26a et 26b sont localisés selon la direction de l'axe OY.

La figure 9 représente en perspective la position des éléments magnétiques 26a et 26b par rapport aux axes OX, OY, OZ. L'élément magnétique 26a est constitué par deux aimants parallélépipédiques 126a et 127a mis bout à bout. Leurs directions d'aimantation sont perpendiculaires à leurs faces d'appui sur le disque codeur 215.

Le vecteur d'induction magnétique B1 généré par l'aimant 126a est dirigé dans le sens positif de l'axe OY alors que le vecteur induction magnétique B2 généré par l'aimant 127a est dirigé dans le sens négatif de l'axe OY.

De même l'élément magnétique 26b est constitué de deux aimants parallélépipédiques 126b et 127b mis bout à bout. Le vecteur induction magnétique B1 généré par l'aimant 126b est dirigé dans le sens négatif de l'axe OY alors que le vecteur induction B2 généré par l'aimant 127b est dirigé dans le sens positif de l'axe OY.

Les particularités de construction du disque codeur 215 favorise la localisation de l'aboutement des aimants 126a et 127a ainsi que celui des aimants 126b et 127b dans un plan défini par les axes OY et OZ tandis que que les vecteurs d'induction magnétique B1 et B2 délivrés par l'élément magnétique 26a sont symétriques par rapport au plan défini par les axes OZ et OX aux vecteurs d'induction B1 et B2 délivrés par l'élément magnétique 26b. Les faces libres des éléments magnétiques 26a et 26b sont situés à une distance R de ce plan XOZ où R est appelé conventionnellement rayon de lecture. Les centres des moyens détecteurs 27a et 27b fixés sur l'extension axiale 222 du disque 221 sont dans le plan YOZ des aboutements des aimants 126a, 127a et 126b, 127b et séparés des éléments magnétiques 26a et 26b par un entrefer e tel que précédemment défini.

## Revendications

1. Dispositif de mesure d'un couple de torsion sur un arbre tournant (1,100) qui possède deux générateurs (26a, 26b) de champ magnétique situés symétriquement dans le plan (P1) d'une section droite dudit arbre (1,100) et deux organes détecteurs (27a, 27b) du champ magnétique immobilisés dans le plan (P2) d'une section droite dudit arbre et dans lequel lesdits organes détecteurs (27a, 27b) délivrent un signal proportionnel au couple de torsion par suite du décalage angulaire relatif des générateurs de champ par rapport aux organes détecteurs, caractérisé par le fait que les générateurs (26a, 26b) de champ magnétique possèdent une structure aimantée à directions d'aimantation antiparallèles et sont supportés par un premier disque (12, 215) solidaire de l'arbre tournant (1, 100) et disposé à l'extrémité d'un moyeu (10, 120) entourant ledit arbre (1, 100) et porteur d'un palier (18, 130) de montage du moyeu (20-120) d'un deuxième disque (21, 121) axialement décalé sur lequel sont rigidement fixés les détecteurs (27a, 27b) du champ magnétique.

2. Dispositif selon la revendication 1, caractérisé par le fait que chaque générateur de champ magnétique (26a, 26b) est constitué par deux aimants parallélépipédiques (126a, 127a - 126b, 127b) jointifs le long d'une de leurs faces latérales et qui possèdent respectivement une face d'appui sur le premier disque (12, 215) et des vecteurs d'induction respectifs B1 et B2 de sens opposés perpendiculaires à ladite face d'appui et que les lignes de jonction des aimants (126a, 127a - 126b, 127b) sont situées dans un premier plan longitudinal diamétral et que les vecteurs d'induction de l'un et l'autre générateur de champ sont disposés symétriquement par rapport à un deuxième plan longitudinal diamétral perpendiculaire audit premier plan.

3. Dispositif selon la revendication 2, caractérisé par le fait que la face d'appui des aimants constitutifs (126a, 127a - 126b, 127b) du générateur de champ magnétique est située dans le plan d'une section droite de l'arbre (1) confondue avec le plan du premier disque (12).

4. Dispositif selon la revendication 2, caractérisé par le fait que la face d'appui des aimants constitutifs (126a, 127a - 126b, 127b) du générateur de champ magnétique est située à la périphérie du premier disque (215).

5. Dispositif selon l'une quelconque des revendications 1 à 4, caractérisé par le fait que l'arbre tournant (100) est limité axialement par des moyens d'entraînement coopérant avec un organe moteur et avec un organe récepteur et s'étend axialement entre les faces latérales du dispositif.

## Claims

1. Device for measuring a torque on a rotating shaft (1, 100) which is provided with two magnetic field generators (26a, 26b) located symmetrically in the plane (P1) of a straight section of said shaft (1, 100) and two magnetic field sensor members (27a, 27b) fixed in a stationary manner in the plane (P2) of a straight section of said shaft and in which said sensor members (27a, 27b) deliver a signal proportional to the torque as a result of the relative angular offset of the field generators with respect to the sensor members, characterised by the fact that the magnetic field generators (26a, 26b) are provided with a magnetised structure with antiparallel directions of magnetisation and are supported by a first disc (12, 215) integral with the rotating shaft (1, 100) and arranged at the extremity of a hub (10,120) surrounding said shaft (1, 100) and carrying a supporting bearing (18, 130) for mounting the hub (20-120) of an axially offset second disc (21, 121) upon which the magnetic field sensors (27a, 27b) are fixed rigidly.

2. Device according to claim 1, characterised by the fact that each magnetic field generator (26a, 26b) is constituted by two parallelepiped magnets (126a, 127a - 126b, 127b) abutting along one of their lateral faces and which have, respectively, one face bearing upon the first disc (12, 215) and respective magnetic induction vectors B1 and B2 with a perpendicular direction opposite said bearing face, and that joining lines of the magnets (126a, 127a - 126b - 127b) are located in a first diametric, longitudinal plane, and that the induction vectors of either field generator are arranged symmetrically with respect to a second, diametric longitudinal plane perpendicular to said first plane.

3. Device according to claim 2, characterised by the fact that the bearing face of the constituent magnets (126a, 127a - 126b, 127b) of the magnetic field generator is located in the plane of a straight section of the shaft (1) joined with the plane of the first disc (12).

4. Device according to claim 2, characterised by the fact that the bearing face of the constituent magnets (126a, 127a - 126b, 127b) of the magnetic field generator is located at the periphery of the first disc (215).

5. Device according to any one of claims 1 to 4, characterised by the fact that the rotating shaft (100) is axially limited by drive means cooperating with an engine member and with a receiving member, and extends axially between the lateral faces of the device.

## Patentansprüche

1. Vorrichtung zur Drill- oder Drehmomentmessung an einer rotierenden Welle (1, 100), die zwei Magnetfeldgeneratoren (26a, 26b) aufweist, die symmetrisch in der Ebene (P1) eines senkrechten Querschnitts der Welle (1, 100) angeordnet sind, und zwei Magnetfelddetektororgane (27a, 27b), die in der Ebene (P2) eines senkrechten Querschnitts der Welle festgesetzt sind, wobei die Detektororgane (27a, 27b) ein Signal liefern, das proportional zu dem Drill- oder Drehmoment infolge einer relativen Winkelversetzung der Feldgeneratoren in bezug auf die Detektororgane ist, dadurch gekennzeichnet, daß die Magnetfeldgeneratoren (26a, 26b) eine Magnetisierungsstruktur mit antiparallelen Magnetisierungsrichtungen aufweisen und durch eine erste Scheibe (12, 215) getragen sind, die fest mit der rotierenden Welle (1, 100) verbunden und am Ende einer Nabe (10, 120) angeordnet ist, welche die Welle (1, 100) umgibt und ein Montagelager (18, 130) für die Nabe (20-120) einer axial versetzten zweiten Scheibe (21, 121) trägt, auf welcher die Magnetfelddetektoren (27a, 27b) starr befestigt sind.

2. Vorrichtung nach Anspruch 1, dadurch gekennzeichnet, daß jeder Magnetfeldgenerator (26a, 26b) durch zwei parallelepipedförmige Magnete (126a, 127a - 126b, 127b) gebildet ist, die entlang ihren Seitenflächen verbunden sind und jeweils eine Anlagefläche an der ersten Scheibe (12, 215) und jeweilige Induktionsvektoren B1 und B2 entgegensetzter Richtung senkrecht zu der Anlagefläche aufweisen, und daß die Verbindungslinien der Magnete (126a, 127a - 126b, 127b) in einer ersten diametralen Längsebene angeordnet sind, und daß die Induktionsvektoren des einen und des anderen Feldgenerators in bezug auf eine zweite Längsebene angeordnet sind, die senkrecht zu der ersten Ebene verläuft.

3. Vorrichtung nach Anspruch 2, dadurch gekennzeichnet, daß die Anlagefläche der den Magnetfeldgenerator bildenden Magnete (126a, 127a - 126b, 127b) in der Ebene eines Querschnitts der Welle (1), mit der Ebene der ersten Scheibe (12) zusammenfallend, angeordnet sind.

4. Vorrichtung nach Anspruch 2, dadurch gekennzeichnet, daß die Anlagefläche der den Magnetfeldgenerator bildenden Magnete (126a, 127a - 126b, 127b) am Rand bzw. dem Umfang der ersten Scheibe (215) angeordnet ist.

5. Vorrichtung nach einem der Ansprüche 1 bis 4, dadurch gekennzeichnet, daß die rotierende Welle (100) axial durch Antriebsmittel begrenzt ist, die mit einem Motororgan und einem Aufnahmeorgan zusammenwirken und sich axial zwischen den Seitenflächen der Vorrichtung erstrecken.
